# EUROPEAN PATENT APPLICATION

(11) **EP 2 524 808 A1**
(43) Date of publication of application: **21.11.2012**
(21) Application number: 12167880.9
(22) Date of filing: 14.05.2012
(51) Int. Cl.: B41F 31/08, B41F 31/28, F16K 11/076, F16K 11/085

(54) **Ink valve assembly for printing press**

(30) Priority: 16.05.2011 JP 2011109471
(71) Applicant: Goss International Corporation, Durham NH 03824 (US)
(72) Inventor: Suzuki, Hideaki, Iruma-shi, Saitama (JP)
(74) Representative: Tischner, Oliver

(57) **Abstract**

A rotary ink valve for providing ink in a printing press having an ink supply includes a stationary outer portion (16) having a first (50) and a second (52) end connected by a body (54), said body (54) having a cylindrical interior area (56) and having at least one bypass aperture (42) adjacent to said first end (50) of said stationary outer portion and at least one ink output aperture (40) adjacent to said second end (52) of said stationary outer portion, said first and second ends (50,52) being open. The ink valve further includes a tubular inner portion (18) lying within and rotatable within said cylindrical interior area (56) of said stationary outer portion and having a first (60) and a second (62) end connected by a side wall (64), and having at least one bypass aperture (66) in said side wall (64) being adjacent to said first end (60) of said tubular inner portion (18) and at least one ink output aperture (68) in said side wall (64) adjacent to said second end (62) of said tubular inner portion (18), said second end (62) being open and said first end (60) being closed, said tubular inner portion (18) being rotatable between at least an open position, a closed position and an intermediate position, said intermediate position being between said open and closed positions. The ink valve further includes at least one of the cylindrical interior area (56) and the side wall (64) having a plurality of grooves (110-113), each of the plurality of grooves (110-113) holding a lubricant.

## Description

This application relates to the field of printing and in particular to the field of ink valve assemblies for printing presses.

### BACKGROUND INFORMATION

In the field of lithographic printing, ink is continuously conveyed from an ink source thorough a series of rollers to a printing plate on a plate cylinder in a printing press. Image portions of the printing plate accept ink from one or more of the last of a series of inking rollers and transfer a portion of that ink to a blanket cylinder as a reverse image from which a portion of the ink is transferred to form a correct-reading image on paper or other materials. It is also essential in conventional lithographic printing processes that a dampening solution containing water and proprietary additives be conveyed continuously to the printing plate whereby transferring in part to the non-image areas of the printing plate the water functions to keep those non-image areas free of ink. Finally, in conventional printing press systems, the ink is continuously made available in varying amounts determined by cross-press column input control adjustments to a plurality of ink injectors.

Lithographic printing plate surfaces in the absence of imaging materials have minute interstices and a hydrophilic or water-loving property to enhance retention of water, that is the dampening solution, rather than ink on the surface of the plate. Imaging the plate creates oleophilic or ink-loving areas according to the image that is to be printed. Consequently, when both ink and dampening solution are presented to an imaged plate in appropriate amounts, only the ink tending to reside in non-image areas becomes disbonded from the plate. In general, this action accounts for the continuous ink and dampening solution differentiation on the printing plate surface, which is integral to the lithographic printing process.

It is necessary to control the correct amount of ink supplied from each of the ink injectors during lithographic printing. U.S. Patent No. 5,179,978, the entire disclosure of which is hereby incorporated by reference, describes a rotary ink valve assembly for controlling ink or printing fluid input in a printing press.

As described in the prior art '978 patent, a rotary ink valve has a stationary outer portion having first and second ends connected by a body and a substantially tubular inner portion having first and second ends connected by a side wall. The body of the outer portion has a substantially cylindrical interior area and the inner portion lies within and is rotatable within this cylindrical interior area of the outer portion. Each of the inner and outer portions has at least one bypass aperture adjacent the first end and at least one ink output aperture adjacent the second end of the respective body and side wall of the inner and outer portions. In the outer portion the first and second ends are open and in the inner portion only the second end is open. The ink supply in the printing press is coupled to the open end of the inner portion for supplying ink to the inner portion. Also provided is a means for rotating the inner portion between at least an open position, a closed position and an intermediate position, the intermediate position being between the open and closed positions.

In the open position only the ink output aperture in the inner portions aligns with the ink output aperture in the outer portion such that ink flows only from the ink output aperture of the outer portion. In the closed position only the bypass aperture in the inner portion aligns with the bypass aperture in the outer portion, such that ink flows only from the ink output aperture of the outer portion. In the intermediate position the apertures in the outer portion are misaligned with apertures in the inner portion such that no ink flows from either the bypass aperture in the outer portion or from the ink output aperture in the outer portion.

As explained in the '978 patent, the outer portion preferably has a plurality of bypass apertures spaced around the body and the inner portion has a corresponding plurality of a bypass aperture spaced around the side wall. Similarly the outer portion has a plurality of ink output apertures spaced around the body and the inner portion has a plurality of ink output apertures spaced around the side wall. In the closed position the bypass apertures in the inner and outer portions are in alignment and in the open position the ink output apertures in the inner and outer portions are in alignment. As stated above in the intermediate position none of the apertures in the outer portion align with any of the apertures in the inner portion. Preferably, the plurality of bypass apertures in the side wall of the inner portion is longitudinally aligned with the plurality of ink output apertures in the side wall of the inner portion, whereas the plurality of bypass apertures in the body of the outer portion are not longitudinally aligned with the plurality of ink output apertures in the body of the outer portion.

The '978 patent further describes a mechanism for sealing between the first ends of the inner and outer portions to prevent ink leaking therebetween. In particular, the valve includes interchangeable first and second annular seals and at at least one interchangeable annular spacer. Furthermore, the outer portion preferably has a collar wherein the collar has a bottom attached to the first end of the outer portion and a top containing a slot. The inner portion has a disk, the disk having a lower surface attached to the first end of the inner portion and a stop pin extending from the lower surface for engaging the slot. The disk also has an upper surface and an activating pin extending from the upper surface for engagement by the means for rotating the inner portion.

### BRIEF SUMMARY OF THE INVENTION

In accordance with an embodiment of the present invention, an ink valve is provided which includes a stationary outer portion having first and second ends connected by a body, said body having a substantially cylindrical interior area and having at least one bypass aperture in said body adj acent said first end of said outer portion and at least one ink output aperture in said body adj acent said second end of said outer portion, said first and second ends being open. The substantially cylindrical interior area has a plurality of grooves, and each of the plurality of grooves holds a lubricant. The ink valve further includes a substantially tubular inner portion lying within and rotatable within said cylindrical interior area of said outer portion and having first and second ends connected by a side wall, and having at least one bypass aperture in said side wall adjacent said first end of said inner portion and at least one ink output aperture in said side wall adjacent said second end of said inner portion, said second end being open and said first end being closed, said inner portion being rotatable between at least an open position, a closed position and an intermediate position, said intermediate position being between said open and closed positions.

In accordance with another embodiment of the present invention, a rotary ink valve for providing ink in a printing press having an ink supply includes a stationary outer portion having first and second ends connected by a body, said body having a substantially cylindrical interior area and having at least one bypass aperture in said body adjacent said first end of said outer portion and at least one ink output aperture in said body adjacent said second end of said outer portion, said first and second ends being open. The ink valve further includes a substantially tubular inner portion lying within and rotatable within said cylindrical interior area of said outer portion and having first and second ends connected by a side wall, and having at least one bypass aperture in said side wall adjacent said first end of said inner portion and at least one ink output aperture in said side wall adjacent said second end of said inner portion, said second end being open and said first end being closed, said inner portion being rotatable between at least an open position, a closed position and an intermediate position, said intermediate position being between said open and closed positions. The ink valve further includes at least one of the substantially cylindrical interior area and the side wall having a plurality of grooves, each of the plurality of grooves holding a lubricant.

In both of the embodiments described above, the lubricant in the grooves reduces or eliminates scratches on the inner portion and outer portion, thereby improving the performance of the ink valve.

### BRIEF DESCRIPTION OF THE DRAWINGS

The present invention will be further described with respect the following Figures, in which:

FIG. 1a and 1b shows a rotary ink valve of prior art U.S. Patent No. 5,179,978;

FIG. 2 is a side view of the outer portion of the rotary ink valve of Figure 1;

FIG. 3 is a cross-sectional view of the outer portion of Figure 1 depicting the bypass apertures;

FIG. 4 is a cross-sectional view of the outer portion of Figure 1 depicting the ink output apertures;

FIG. 5 is a top view of the outer portion of Figure 1;

FIG. 6 is a side view of the inner portion of the rotary ink valve of Figure 1;

FIG. 7 is a perspective view of the outer portion of the rotary ink valve of Figure 1;

FIG. 8 is a perspective view of the inner portion of the rotary ink valve of Figure 1;

FIG. 9 is a cross-sectional view of the inner portion assembled with the outer portion of the rotary ink valve of Figure 1;

FIGS. 10A-10F schematically depict the relationship of the ink outlet apertures (FIGS. 10A, 10B, 10C) of the inner and outer portions and the bypass apertures (FIGS. 10D, 10E, 10F) of the inner and outer portions for the open position (FIGS. 10A, 10D), the intermediate position (FIGS. 10B, 10E) and the closed position (FIGS. 10C, 10F) of the rotary ink valve of Figure 1;

FIGS. 11A and 11B are cross-sectional views depicting the interchangeable sealing parts of the means for sealing in two different configurations for the ink valve of Figure 1; and

Figures 12 and 13 shows a rotary ink valve according to a preferred embodiment of the present invention.

### DETAILED DESCRIPTION OF PREFERRED EMBODIMENTS OF THE INVENTION

In accordance with an embodiment of the present invention, the rotary ink valve is of the general type described in U.S. 5,179,978, including a rotatable inner portion (sometimes referred to as the spool) and a stationary outer portion (sometimes referred to as the cage). In this regard, the rotary ink valve is air actuated and provides for dividing a constant stream of ink or fluid into timed discharges. As a result, the volume of ink discharged is optimally controlled. The rotary ink valve has a zero or intermediate setting where no fluid is discharged. During operation of the rotary ink valve ink flows from the ink output apertures of the outer portion of the ink valve when the valve is in an open position. In a closed position ink flows from the valve from bypass apertures so that the ink is allowed to substantially continually flow through the rotary ink valve. This provides for more controlled operation. Effects due to differences in pressure levels between the ports connected to the bypass aperture and the ink output aperture are minimized because of the intermediate position of the rotary ink valve.

In the intermediate position none of the apertures in the outer portion align with the apertures in the inner portion. This ensures that there is no inner action between the ink flowing from the ink output apertures and the bypass apertures. During operation of the rotary ink valve, the valve is changed from the open position to the closed position in one movement and thus the intermediate position occurs only momentarily while the inner portion rotates. Thus although there is a moment when no ink flows from the rotary ink valve, the ink does substantially flow through the valve.

During operation the rotary ink valve is controlled such that the time spent in the open position compared to the time spent in the closed position is adjusted as a function of the ink demand by the printing press. This is accomplished by timed energizing and de-energizing of the normally open and normally closed air valves which move a shuttle piston back and forth resulting in the rotary movement of the inner portion of the rotary ink valve. The drive is symmetrical such that the travel time of the shuttle piston is the same in either direction. It is the dwell time of the shuttle position at one or the other of its two extreme positions which is a function of the ink required by the printing press. Preferably, the normally open and normally closed air valves are configured such that a default position is when the valves are not energized and corresponds to the closed position of the rotary ink valve.

Although the prior art ink valve described above is extremely effective, it has been found that the opposing surfaces of the inner and outer portions of the valve are subject to scratching which degrades performance, and in some cases may prevent operational movement of the valve entirely. For example, as the ink supply pressure rises, or, due to ink characteristics, the torque required to turn the inner portion of the valve increases, the contact pressure between the outer surface of the inner portion and the inner surface of the outer portion rises. This increased pressure can cause damage to the outer surface of the inner portion and the inner surface of the outer portion. In accordance with an embodiment of the present invention, one or more grooves are provided on the interior surface of the outer portion of the valve. Lubricant is provided in the grooves which reduces and/or eliminates the scratches from the contact surface. Examples of suitable lubricants include greases and other lubricants typically used for lubricating bearings, pistons and valves. A non-limiting example of suitable grease lubricant is Gleitmo 585 K. The grease is applied to the valve during assembly and while it is possible to disassemble the valve and replace the grease, it is likely unnecessary to replace the grease during the usable life of the valve. Further, as the valve is used, eventually ink may make its way into the grooves, and the oil within the ink may provide additional lubrication.

In an alternative embodiment, the grooves can be placed on the outer surface of the inner portion of the valve, rather than on the inner surface of the outer portion of the valve. Although this embodiment is also effective, it has been found that if it is later necessary to disassemble the valve, grooves on the outer surface of the inner portion may have a tendency to catch on a seal located in the outer portion. This problem is not encountered if the grooves are located on the inner surface of the outer portion.

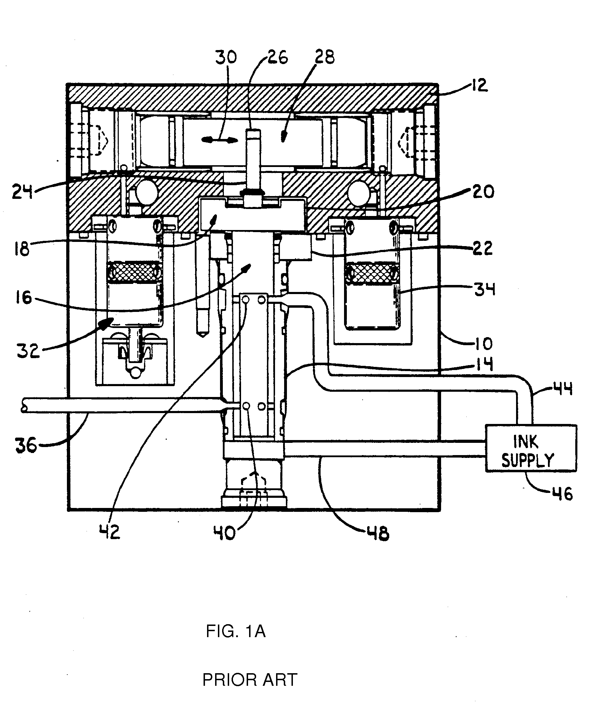

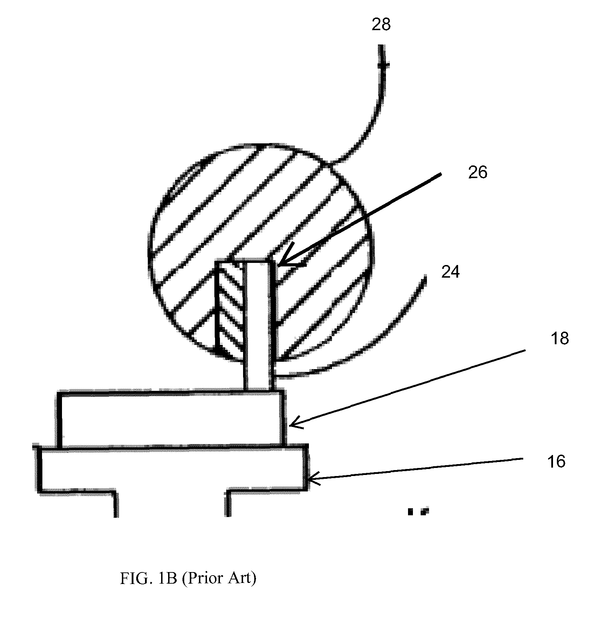

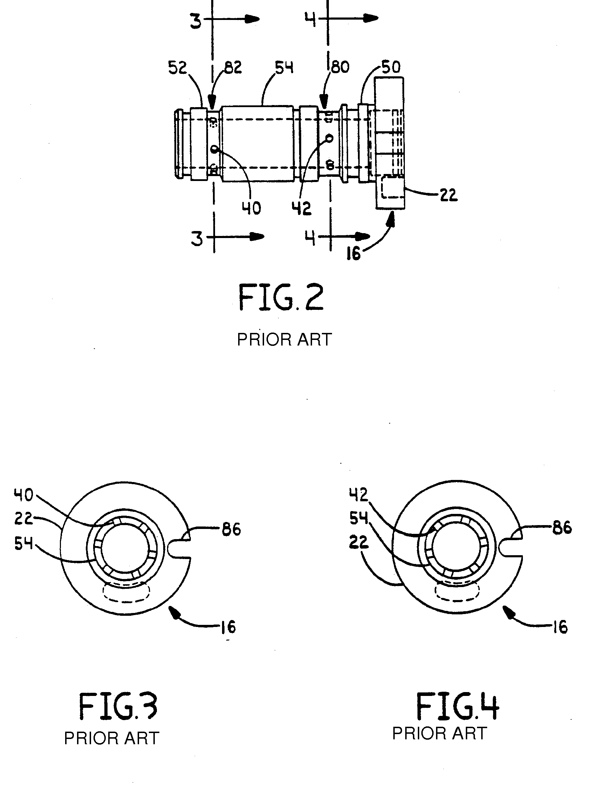

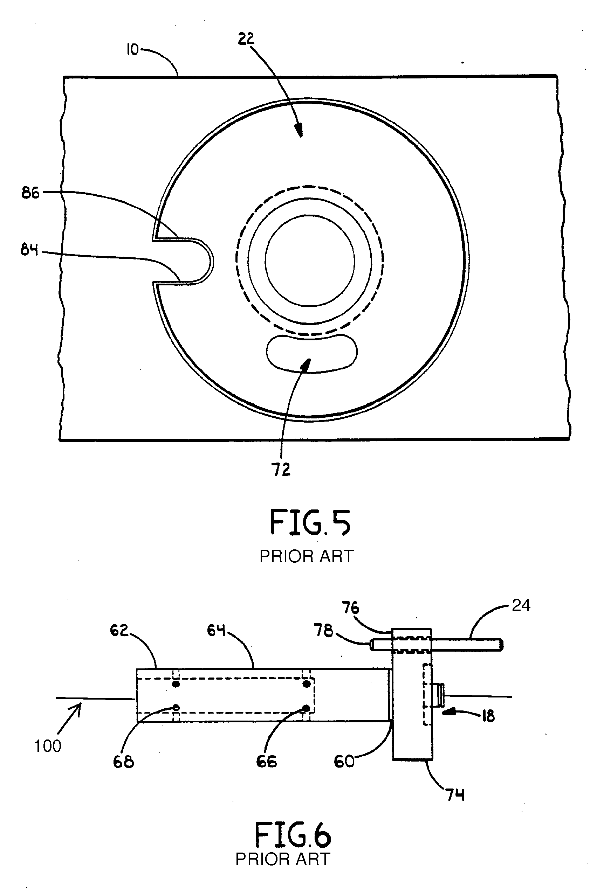

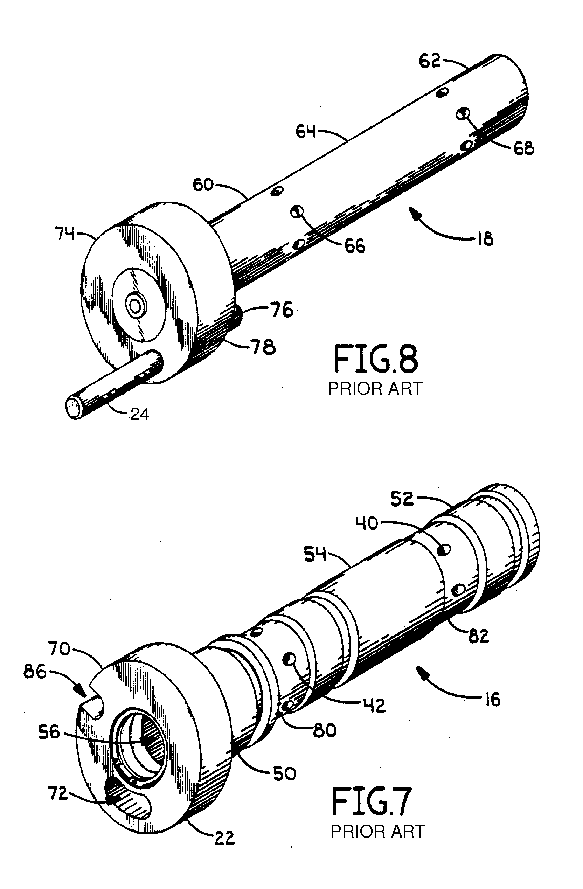

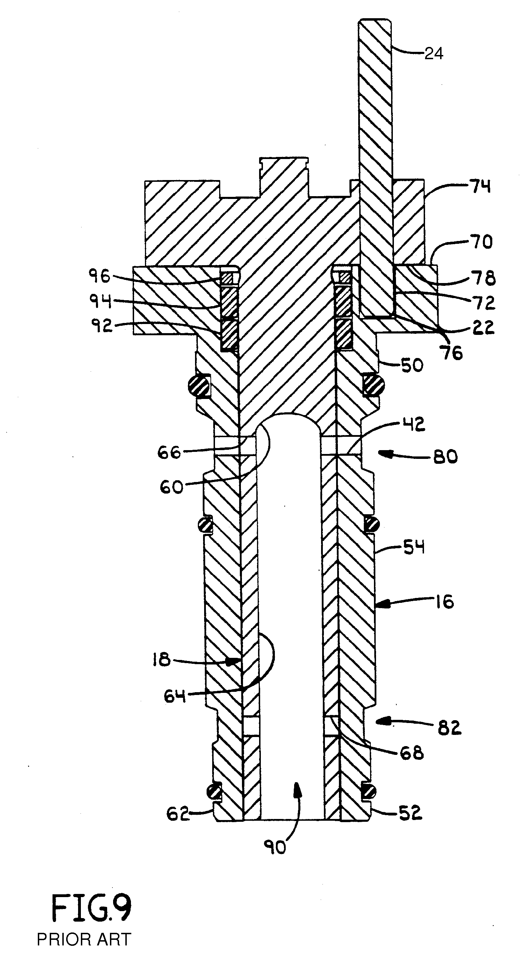

Figures 1-11 show an ink valve assembly in accordance with U.S. 5, 179,978. The rotary ink valve is comprised of an inner section 16 and an outer section 18, and is shown contained in a housing 10 in FIG. 1a. A perspective view of the outer and inner portions of the rotary ink valve is depicted in FIG. 7 and FIG. 8 respectively, and FIGS. 2-5 are various views of the outer portion and FIG. 6 is a side view of the inner portion. FIG. 9 is a cross-sectional view of the inner portion assembled with the outer portion.

Prior art figure 1 a shows the rotary ink valve (16, 18) contained in a housing 10 to which is attached a cover 12. The housing 10 has a substantially cylindrical cavity 14 which contains the outer portion 16 of the rotary ink valve. The inner portion 18 of the rotary ink valve fits snugly within the outer portion 16 and is held in place by a circular aperture 20 in the cover 12. The cover 12 secures the outer portion 16 within the cavity 14 of the housing 10 by overlapping an edge of a collar 22 on the outer portion 16.

An activating pin 24 on the inner portion 18 engages a slot 26 in a shuttle piston 28. The shuttle piston 28 is operated in the direction of arrows 30 by normally opened air valve 32 and normally closed air valve 34. Figure 1b shows the pin 24, slot 26 and piston 28 in further detail. When the valves 32, 34 are energized the shuttle piston 28 moves in one direction to the limit of its travel and when the air valves 32, 34 are deenergized the shuttle piston 28 moves to the other limit of its travel. The slot 26 in the shuttle piston 28 and the activating pin 24 of the rotatable inner portion 18 translate the linear motion of the shuttle piston 28 to a rotary motion of the inner portion 18.

Housing 10 has an ink outlet port 36 which communicates with the ink output apertures 40 of the outer portion 16. Bypass apertures 42 of the outer portion 16 communicate with a bypass port 44 in the housing 10.

An ink supply 46 provides ink under pressure to an ink inlet port 48 in the housing 10. The ink inlet port 48 routes ink to the inner portion 18 as will be described below. The bypass port 44 is connected to the ink supply 46 for circulating the ink through the rotary ink valve when the valve is in the closed position. As one of ordinary skill in the art will appreciate, the housing 10 can contain a plurality of rotary ink valves.

Referring now to prior art figures 2-9, the outer portion 16 has first and second ends 50, 52 connected by a body 54. The body 54 has a substantially cylindrical interior area 56 and has a plurality of bypass apertures 42 adjacent the first end 50 and a plurality of ink output apertures 40 adj acent the second end 52, the first and second ends 50 and 52 being open. The inner portion 18 is a substantially tubular configuration and has first and second ends 60, 62 connected by a side wall 64. The inner portion 18 has a plurality of bypass apertures 66 in the side wall 64 adjacent the first end 60 and a plurality of ink output apertures 68 and the side wall 64 adjacent the second end 62, the second end 62 being open and the first end 60 being closed.

In the exemplary valve shown, a collar 22 is attached to the first end 50 of the outer portion 16 and has a top 70 containing a slot 72. The inner portion 18 has a disk 74 attached to the first end 60 of the inner portion 18. The disk 74 has a stop pin 78 extending from a lower surface 76 thereof. When the inner portion 18 is inserted into the interior area 56 of the outer portion 54 the stop pin 76 engages the slot 72. This provides for positive stop limits in both directions of rotation of the inner portion 18. The outer portion 16 has a first recessed annular area 80 at the location of the bypass apertures 42 and a second recessed annular area 82 at the location of the ink output apertures 40. This allows for the housing to contain a single ink outlet port 36 for the ink output apertures 40 in the outer portion 16 and a single bypass port 44 for the bypass apertures 42 in the outer portion 16. Also, the ink outlet port 36 and the bypass port 42 can be located at any position around the circumference of the outer portion 16.

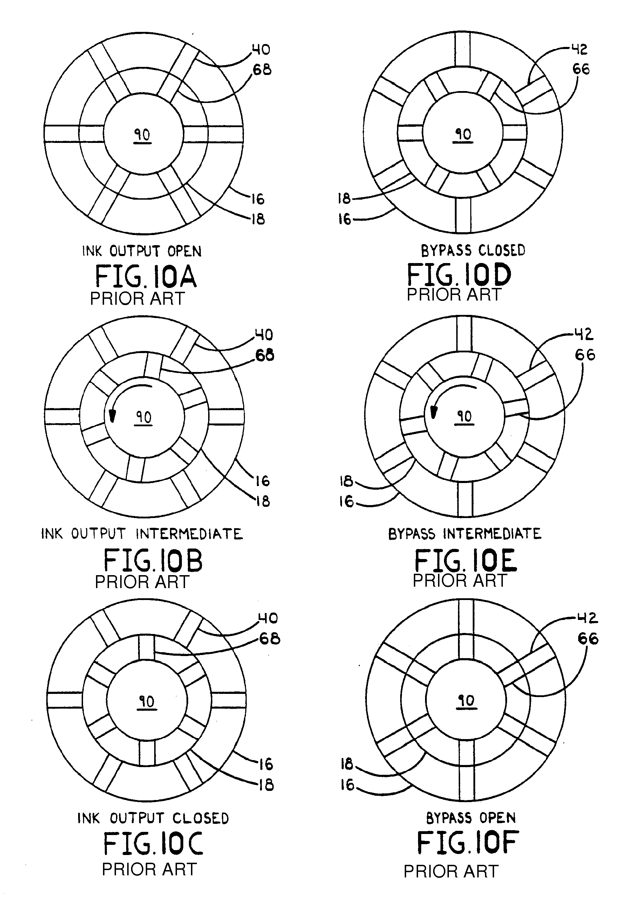

The housing 10 further has an antirotation part 84 for engaging a slot 86 in the collar 22 of the outer portion 16. In this exemplary valve system, this is provided so that as the inner portion 18 rotates back and forth within the outer portion 16, the outer portion 16 is prevented from moving. Referring to FIG. 7, the outer portion 16 has a circular cross-sectional configuration. In the outer portion 16 the plurality of bypass apertures 42 are misaligned with the plurality of ink output apertures 40. Conversely, the plurality of bypass apertures 66 in the inner portion 18 are in alignment with the plurality of ink output apertures 68 (see FIG. 8). In the valve as depicted in FIG. 3 (cross-section of the outer portion 16 at the ink output apertures 40) and FIG. 4 (cross-section of the bypass apertures 42) the pattern of ink output apertures 40 is offset by approximately 38.degree. from the pattern of bypass apertures 42. In the valve shown, six bypass apertures 42 and six ink output apertures 40 are utilized. The relationship of the ink output apertures 40 and 68 are depicted in FIG. 10A and the relative position of the bypass apertures 42 and 66 are depicted in FIG. 10D for an open position of the rotary ink valve. As can be clearly seen, the ink output apertures 40 and 68 are in alignment and the bypass apertures 42 and 66 are not in alignment and therefore ink will flow from the interior 90 of the inner portion 16 through the ink output apertures 40 and 68. In the intermediate position depicted in FIG. 10B for the ink output apertures 40 and 68 and in FIG. 10E for the bypass apertures 42 and 66, none of the apertures 40 and 68 or 42 and 66 are in alignment and thus for this intermediate position, as the inner portion 18 rotates within the outer portion 16, ink cannot flow from either the bypass apertures 42 or the ink output apertures 40 of the outer portion 16. Finally, in the closed position of the rotary ink valve, the bypass apertures 42 and 66 are in alignment and the ink output apertures 40 and 68 are not in alignment, thereby permitting ink to flow and circulate through the rotary ink valve while the valve is in the closed position.

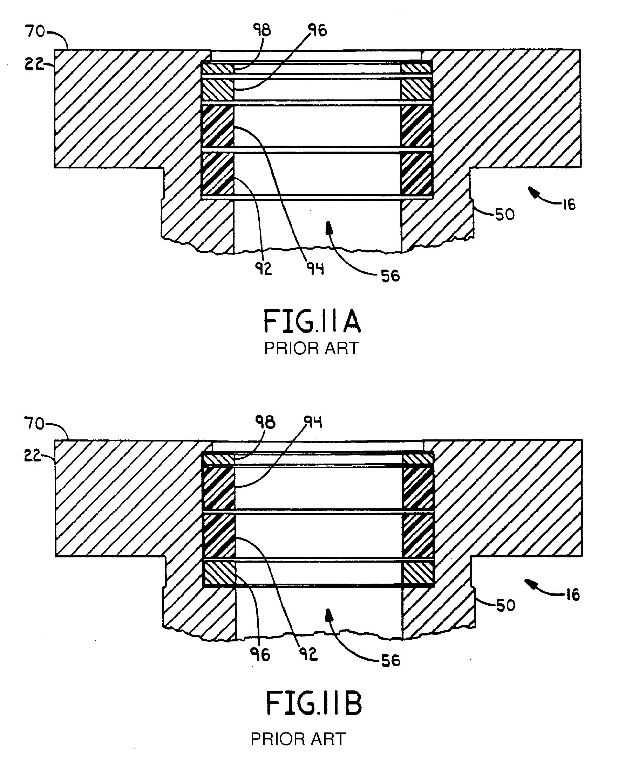

In order to prevent ink from leaking between the first ends 50 and 60 of the inner and outer portions 18, 16 a sealing mechanism is provided in the first end 50 or, as depicted in FIGS. 11A and 11B, substantially in the collar 22 of the outer portion 16. The sealing mechanism is shown composed of at least first and second interchangeable annular seals 92 and 94 and at least one interchangeable annular spacer 96. The annular seals 92, 94 can be made of any suitable seal or gasket material. As depicted in FIG. 11A the annular seals 92 and 94 are adjacent one another with the annular spacer 96 located near the top surface 70 of the collar 22. A C-ring 98 holds the seals 92, 94 and the spacer 96 in position. After a period of operation in which the seals may tend to wear, the seals 92 and 94 can be rearranged with the spacer 96. For example, as depicted in FIG. 11B, the seals 92, 94 have been interchanged with the spacer 96 allowing the seals 92, 94 to contact the side wall 64 at the first end 60 of the inner portion 18 at a slightly different location which will provide a new sealing capacity to the rotary ink valve.

Although the ink valve described in Figures 1-11 is effective, it has been found to have certain performance issues. In particular, increased ink supply pressure from the ink supply 46 may increase the contact pressure between inner portion 18 and outer portion 16, scratching the outer surface of inner portion 18 and/or the inner surface of outer portion 16, or even preventing rotational movement of the inner portion altogether. In addition, changing ink characteristics may increase the torque required to be applied to the activating pin 24 of the rotatable inner portion 18 from the shuttle piston 28. This may also increase the contact pressure between inner portion 18 and outer portion 16, scratching the outer surface of inner portion 18 and/or the inner surface of outer portion 16, or even preventing rotational movement of the inner portion altogether.

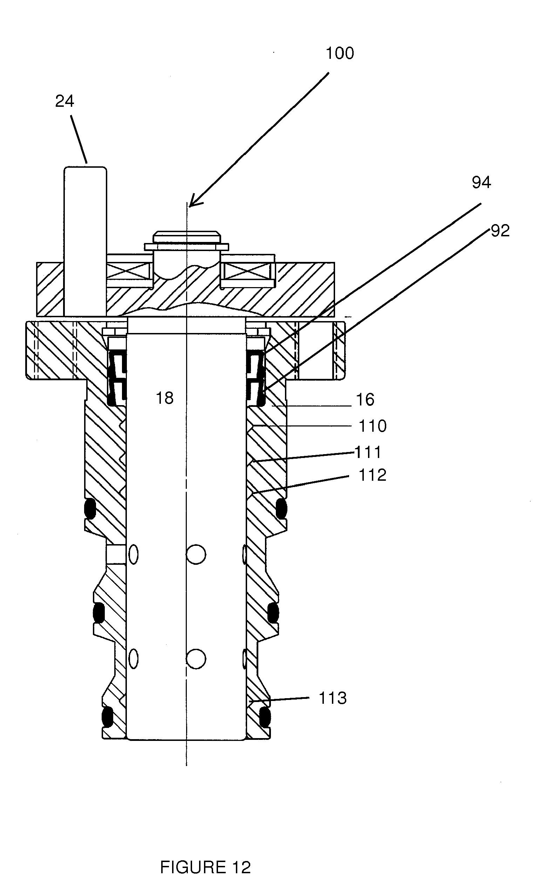

In accordance with an embodiment of the present invention, an outer surface of inner section 18 or an inner surface of outer section 16 includes a plurality of annular grooves spaced along axis 100. Figure 12 illustrates an embodiment of the present invention, with similar components bearing the identical reference numbers to prior art figures 1-11. Referring to Figure 12, outer section 16 is shown having a plurality of grooves 110, 111, 112, 113 spaced along axis 100.

Lubricant is applied to the grooves 110, 111, 112, and 113 during assembly of the ink valve. Examples of suitable lubricants include greases and other lubricants typically used for lubricating bearings, pistons and valves. A non-limiting example of suitable grease lubricant is Gleitmo 585 K. The grease is applied to the valve during assembly and while it is possible to disassemble the valve and replace the grease, it is likely unnecessary to replace the grease during the usable life of the valve. Further, as the valve is used, eventually ink may make its way into the grooves, and the oil within the ink may provide additional lubrication.

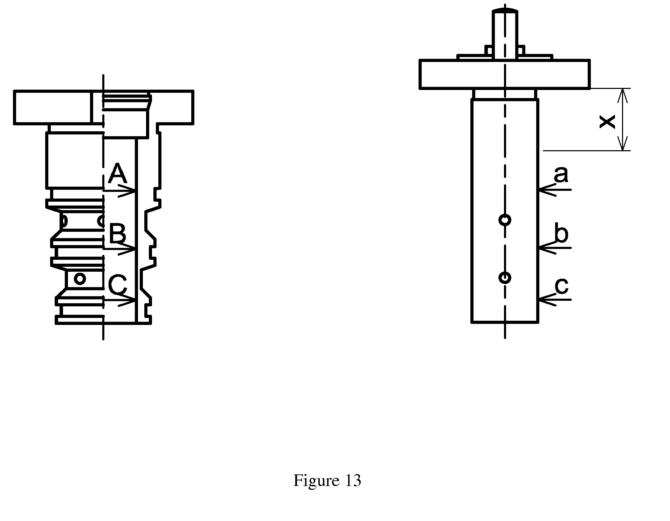

Referring to Figure 13, it has been found that in an exemplary valve having a sidewall 64 with a length of 50 mm, the areas which are prone to scratching are areas A (of outer portion) and a (of inner portion) at 10mm <= x < 20mm, and areas C (of outer portion) and c (of inner portion) at 42mm <=x<=50mm. Areas B (of outer portion) and b (of inner portion) which correspond to the locations of the ink holes 66, 68 have relatively few scratches.

Preferably, the grooves 110, 111, and 112 are located in area A, with groove 113 located in area C. Other arrangements and numbers of grooves are also possible. It is advantageous, however, to locate the grooves in areas A and C.

The grooves 110, 111, 112, 113 preferably extend around the entire inner circumference of the outer portion 16. The width and depth of the grooves are selected to provide a sufficient area to hold the lubricant. As an example, it has been found that a width between 1.5 and 2 mm, preferably 1.7 mm, and a depth between 0.5 and 1 mm, preferably 0.8 mm, is effective. It is advantageous to remove sharp edges or burrs from the grooves during manufacturing to further limit the possibility of scratching the surface of the inner portion.

As explained above, in an alternative embodiment, the grooves can be placed on the outer surface of the inner portion of the valve, rather than on the inner surface of the outer portion of the valve as shown in Figure 12. Although this embodiment is also effective, it has been found that if it is later necessary to disassemble the valve, grooves on the outer surface of the inner portion may have a tendency to catch on U shaped seals 92, 94 located in the outer portion. This problem is not encountered if the grooves are located on the inner surface of the outer portion.

In the preceding specification, the invention has been described with reference to specific exemplary embodiments and examples thereof. It will, however, be evident that various modifications and changes may be made thereto without departing from the broader spirit and scope of invention as set forth in the claims that follow. The specification and drawings are accordingly to be regarded in an illustrative manner rather than a restrictive sense.

The invention can also have one or more of the following features:
1. A rotary ink valve for providing ink in a printing press having an ink supply, comprising:
   a stationary outer portion having first and second ends connected by a body, said body having a substantially cylindrical interior area and having at least one bypass aperture in said body adjacent said first end of said outer portion and at least one ink output aperture in said body adjacent said second end of said outer portion, said first and second ends being open, the substantially cylindrical interior area having a plurality of grooves, each of the plurality of grooves holding a lubricant; and
   a substantially tubular inner portion lying within and rotatable within said cylindrical interior area of said outer portion and having first and second ends connected by a side wall, and having at least one bypass aperture in said side wall adjacent said first end of said inner portion and at least one ink output aperture in said side wall adjacent said second end of said inner portion, said second end being open and said first end being closed, said inner portion being rotatable between at least an open position, a closed position and an intermediate position, said intermediate position being between said open and closed positions.
   Said ink supply coupled to at least said open second end of said inner portion for supplying ink to said inner portion; and wherein the ink valve further includes a piston, the piston rotating said inner portion between the open position, the closed position and the intermediate position.

In said open position only said at least one ink output aperture in said inner portion aligns with said at least one ink output aperture in said outer portion such that ink flows from said at least one ink output aperture of said outer portion, wherein in said closed position, only said at least one bypass aperture in said inner portion aligns with said at least one bypass aperture in said outer portion, such that ink flows from said at least one bypass aperture of said outer portion, and wherein in said intermediate position said at least one bypass aperture and said at least one ink output aperture in each of said inner and outer portions are misaligned such that no ink flows from said at least one bypass aperture of said outer portion and no ink flows from said at least one ink output aperture of said outer portion.

At least one of the plurality of grooves is located between the first end and the at least one ink output aperture, and a least one of the plurality of grooves is located between the second end and the at least one ink output aperture.

At least one ink output aperture on said outer portion includes a plurality of ink output apertures spaced around said body and said at least one ink aperture on said inner portion has a plurality of ink output apertures spaced around said side wall, said plurality of ink output apertures in said inner portion aligning with respective ink output apertures in said outer portion when said rotatable ink valve is in said open position.

At least one of the plurality of grooves is located between the first end and the plurality of ink output apertures, and a least one of the plurality of grooves is located between the second end and the plurality of one ink output apertures.

The at least one bypass aperture on said outer portion and said at least one bypass aperture on said inner portion each include a plurality of bypass apertures.

In said open position only said plurality of ink output apertures in said inner portion aligns with said plurality of ink output apertures in said outer portion such that ink flows from said plurality of ink output apertures of said outer portion, wherein in said closed position, only said plurality of bypass apertures in said inner portion aligns with said plurality of bypass apertures in said outer portion, such that ink flows from said plurality of bypass apertures of said outer portion, and wherein in said intermediate position said plurality of bypass apertures and said plurality of ink output apertures in each of said inner and outer portions are misaligned such that no ink flows from said plurality of bypass apertures of said outer portion and no ink flows from said plurality of ink output apertures of said outer portion.

At least one of the plurality of grooves is located between the first end and the at least one ink output aperture, and a least one of the plurality of grooves is located between the second end and the at least one ink output aperture.

A rotary ink valve for providing ink in a printing press having an ink supply, comprising:
a stationary outer portion having first and second ends connected by a body, said body having a substantially cylindrical interior area and having at least one bypass aperture in said body adjacent said first end of said outer portion and at least one ink output aperture in said body adjacent said second end of said outer portion, said first and second ends being open; and
a substantially tubular inner portion lying within and rotatable within said cylindrical interior area of said outer portion and having first and second ends connected by a side wall, and having at least one bypass aperture in said side wall adjacent said first end of said inner portion and at least one ink output aperture in said side wall adjacent said second end of said inner portion, said second end being open and said first end being closed, said inner portion being rotatable between at least an open position, a closed position and an intermediate position, said intermediate position being between said open and closed positions; and
at least one of the substantially cylindrical interior area and the side wall having a plurality of grooves, each of the plurality of grooves holding a lubricant.

Said ink supply coupled to at least said open second end of said inner portion for supplying ink to said inner portion; and wherein the ink valve further includes a piston, the piston rotating said inner portion between the open position, the closed position and the intermediate position.

In said open position only said at least one ink output aperture in said inner portion aligns with said at least one ink output aperture in said outer portion such that ink flows from said at least one ink output aperture of said outer portion, wherein in said closed position, only said at least one bypass aperture in said inner portion aligns with said at least one bypass aperture in said outer portion, such that ink flows from said at least one bypass apertures of said outer portion, and wherein in said intermediate position said at least one bypass aperture and said at least one ink output aperture in each of said inner and outer portions are misaligned such that no ink flows from said at least one bypass aperture of said outer portion and no ink flows from said at least one ink output aperture of said outer portion.

At least one of the plurality of grooves is located between the first end and the at least one ink output aperture, and a least one of the plurality of grooves is located between the second end and the at least one ink output aperture.

The at least one ink output aperture on said outer portion includes a plurality of ink output apertures spaced around said body and said at least one ink aperture on said inner portion has a plurality of ink output apertures spaced around said side wall, said plurality of ink output apertures in said inner portion aligning with respective ink output apertures in said outer portion when said rotatable ink valve is in said open position.

At least one of the plurality of grooves is located between the first end and the plurality of ink output apertures, and a least one of the plurality of grooves is located between the second end and the plurality of one ink output apertures.

The at least one bypass aperture on said outer portion and said at least one bypass aperture on said inner portion each include a plurality of bypass apertures.

In said open position only said plurality of ink output apertures in said inner portion aligns with said plurality of ink output apertures in said outer portion such that ink flows from said plurality of ink output apertures of said outer portion, wherein in said closed position, only said plurality of bypass apertures in said inner portion aligns with said plurality of bypass apertures in said outer portion, such that ink flows from said plurality of bypass apertures of said outer portion, and wherein in said intermediate position said plurality of bypass apertures and said plurality of ink output apertures in each of said inner and outer portions are misaligned such that no ink flows from said plurality of bypass apertures of said outer portion and no ink flows from said plurality of ink output apertures of said outer portion.

At least one of the plurality of grooves is located between the first end and the at least one ink output aperture, and a least one of the plurality of grooves is located between the second end and the at least one ink output aperture.

## Claims

1. A rotary ink valve for providing ink in a printing press having an ink supply, comprising:
a stationary outer portion having first and second ends connected by a body, said body having a substantially cylindrical interior area and having at least one bypass aperture in said body adjacent said first end of said outer portion and at least one ink output aperture in said body adjacent said second end of said outer portion, said first and second ends being open, and
a substantially tubular inner portion lying within and rotatable within said cylindrical interior area of said outer portion and having first and second ends connected by a side wall, and having at least one bypass aperture in said side wall adjacent said first end of said inner portion and at least one ink output aperture in said side wall adjacent said second end of said inner portion, said second end being open and said first end being closed, said inner portion being rotatable between at least an open position, a closed position and an intermediate position, said intermediate position being between said open and closed positions,
at least one of the substantially cylindrical interior area and the side wall having a plurality of grooves, each of the plurality of grooves holding a lubricant.

2. The ink valve of claim 1, wherein said ink supply coupled to at least said open second end of said inner portion for supplying ink to said inner portion; and wherein the ink valve further includes a piston, the piston rotating said inner portion between the open position, the closed position and the intermediate position.

3. The ink valve of any one of claims 1 or 2, wherein, in said open position only said at least one ink output aperture in said inner portion aligns with said at least one ink output aperture in said outer portion such that ink flows from said at least one ink output aperture of said outer portion, wherein in said closed position, only said at least one bypass aperture in said inner portion aligns with said at least one bypass aperture in said outer portion, such that ink flows from said at least one bypass aperture of said outer portion, and wherein in said intermediate position said at least one bypass aperture and said at least one ink output aperture in each of said inner and outer portions are misaligned such that no ink flows from said at least one bypass aperture of said outer portion and no ink flows from said at least one ink output aperture of said outer portion.

4. The ink valve of any one of claims 1 to 3, wherein at least one of the plurality of grooves is located between the first end and the at least one ink output aperture, and a least one of the plurality of grooves is located between the second end and the at least one ink output aperture.

5. The ink valve of any one of claims 1 to 4, wherein the at least one ink output aperture on said outer portion includes a plurality of ink output apertures spaced around said body and said at least one ink aperture on said inner portion has a plurality of ink output apertures spaced around said side wall, said plurality of ink output apertures in said inner portion aligning with respective ink output apertures in said outer portion when said rotatable ink valve is in said open position.

6. The ink valve of claim 5, wherein at least one of the plurality of grooves is located between the first end and the plurality of ink output apertures, and a least one of the plurality of grooves is located between the second end and the plurality of one ink output apertures.

7. The ink valve of claim 6, wherein the at least one bypass aperture on said outer portion and said at least one bypass aperture on said inner portion each include a plurality of bypass apertures.

8. The ink valve of claim 7, wherein, in said open position only said plurality of ink output apertures in said inner portion aligns with said plurality of ink output apertures in said outer portion such that ink flows from said plurality of ink output apertures of said outer portion, wherein in said closed position, only said plurality of bypass apertures in said inner portion aligns with said plurality of bypass apertures in said outer portion, such that ink flows from said plurality of bypass apertures of said outer portion, and wherein in said intermediate position said plurality of bypass apertures and said plurality of ink output apertures in each of said inner and outer portions are misaligned such that no ink flows from said plurality of bypass apertures of said outer portion and no ink flows from said plurality of ink output apertures of said outer portion.

9. The ink valve of any one of claims 1 to 8, wherein at least one of the plurality of grooves is located between the first end and the at least one ink output aperture, and a least one of the plurality of grooves is located between the second end and the at least one ink output aperture.
